## Europäisches Patentamt
## European Patent Office
## Office européen des brevets

(11) Publication number: **0 063 400**
**B1**

(12) **EUROPEAN PATENT SPECIFICATION**

(45) Date of publication of patent specification: **11.09.85**

(51) Int. Cl.⁴: **A 21 B 3/07, A 21 C 9/08**

(21) Application number: **82200462.8**

(22) Date of filing: **15.04.82**

(54) Method and apparatus for transferring proofed doughpieces on an oven underlay.

(30) Priority: **16.04.81 NL 8101904**

(43) Date of publication of application:
**27.10.82 Bulletin 82/43**

(45) Publication of the grant of the patent:
**11.09.85 Bulletin 85/37**

(84) Designated Contracting States:
**AT BE CH DE GB IT LI NL SE**

(56) References cited:
**FR-A-2 032 344**
**US-A-3 603 271**

(73) Proprietor: **Gebr. van Capelleveen B.V.**
**Hyperonenweg 30**
**NL-3542 AG Utrecht (NL)**

(72) Inventor: **van Capelleveen, Pieter**
**Dr. Schaepmanlaan 3A**
**NL-3972 ET Driebergen-Rijsenburg (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The invention relates to a method of transferring proofed doughpieces from a proofer transport to a continuously moving oven underlay, in which a doughpiece batch from the proofer transport is picked up by a transfer belt in a pick-up zone by driving said transfer belt to pull said batch over a leading portion of said belt, said transfer belt, controlled by a sensor arranged adjacent the oven underlay, is advanced towards the underlay and the batch lying on the transfer belt is deposited on the oven underlay in a delivery zone by driving the transfer belt in an unloading sense and withdrawing the belt simultaneously over the oven underlay surface.

Such a method is disclosed in US patent 3,603,271, wherein the transfer of doughpieces is effected by an endless transfer belt with roller drive mounted in a slide movable between the proofer transport and the oven and through two self-supporting end edges where the belt is relatively flat so that said end edges can be brought in close proximity to the supporting transport faces of the doughpieces, whereby said doughpieces are drawn over one edge of the belt and deposited over the other edge.

The known method is not fit for solving the problem of transfer of doughpieces from a proofer transport to a continuously moving oven underlay, wherein the supply rate of the doughpieces is determined by the speed of the proofer transport, while the delivery rate of the doughpieces is determined by the, different, speed of the oven underlay. This means that differences in speed between supply and delivery have to be equalized by means of the endless transfer belt. In particular in case of small bread which has a short baking time, so that the speed of the oven underlay is high, substantial spaces occur on the oven underlay, i.e. the filling of the oven is not optimal.

It is the object of the invention to eliminate this drawback.

To this effect according to the invention the transfer belt, signalled by the batch already present on the oven underlay, is advanced from a position on the other side of the proofer transport, over the proofer transport towards the oven underlay and concurrently therewith, thereby picks up a batch from the proofer transport, said transfer belt advance is continued over the oven underlay to catch up with the previous batch; the batch is deposited on the oven underlay consecutively to the previous batch on driving the transfer belt in supplying sense with simultaneous withdrawal of the transfer belt in a direction opposite to the transport direction of the oven underlay and so depositing the doughpiece batch over the same leading portion, over which the batch has been picked up before, which withdrawal of the transfer belt is continued until the starting position on the said other side of the proofer transport is reattained.

Since the transfer belt itself is only driven in an amount sufficient to pick up a batch of doughpieces from the proofer transport and afterwards is driven in the reverse direction to deliver the batch on the oven underlay and since the bridging of the distance between the proofer transport and the depositing area on the oven underlay is effected by moving the entire transfer belt and not by driving the belt itself, any difference in supply rate and delivery rate is easily compensated without the need of driving the transfer belt carrying a batch of doughpieces at a high speed. Therefore different oven underlay speeds can be simply taken into account, which are determined by the baking times required for the different baking products. Independently of the underlay speed there is thus ensured an optimal occupation of the oven.

For performing the method, the invention provides an apparatus having a reliable operation through a simple manner of driving.

The apparatus according to the invention for transferring proofed doughpieces from a proofer transport to a continuously moving oven underlay, provided with a single transfer belt drivable in two directions and furthermore being entirely translatable between a pick-up zone at the proofer transport to a delivery zone above the oven underlay and comprising a sensor, such as a photocell, for detecting the position of a preceding dough piece batch on the oven underlay and for initiating loading and advance of the transfer belt to the delivery zone above the underlay (US—A—3,603,271) is characterized by said transfer belt having a leading portion over which a batch is picked up as well as deposited and by a further sensor at the pick-up zone for doughpiece batches supplied by the proofer transport for positioning the doughpiece batches in such a way that, seen in the direction of the oven transport, the leading doughpieces of the batch on the transfer belt are always loaded at the same position relative to said loading edge. Therefore the leading doughpieces of each batch to be deposited on the oven underlay are always in the same position at the moment the batch is loaded onto the transfer belt. It is thus ensured that during the pick-up of the doughpiece batches, these always come to lie on a previously selected place on the transfer belt and during the delivery of the doughpiece batches on the oven underlay, these properly link up with the preceding batch.

A simple control of the transfer belt is provided by the invention wherein the drive of the transfer belt is effected by means of a rack, said belt being movable along said rack for driving the belt, said rack being translatable over the proofer transport towards the oven underlay and back to a starting position behind the proofer transport. Thus the rack and the belt are being held stationary in a position behind the proofer transport and after initiating by the sensors the transfer belt is drawn along the rack thereby picking up doughpieces from the proofer transport. After the loading of the transfer belt the rack, so far stationary, is translated together with the transfer belt to the delivery position above the oven underlay and arrived at that position the rack is again arrested, while the transfer belt is displaced reversally along the rack for driving the belt in supplying sense and subsequently the assembly of rack and transfer belt is again translated towards the starting position.

The transfer belt according to the invention, as already stated, can be driven in loading and unloading sense over one single leading end edge. This means that only a part of the length of the endless belt has a doughpiece-carrying function. Making use of this, in a further embodiment of the invention, a drawback of relatively short and wide endless conveyor belts, namely difficult centering thereof, is eliminated by replacing according to the invention the non-carrying portion of the conveyor belt by a plurality of chains guided over chain wheels. The chain wheels are mounted on a common shaft which also carries a gear which coacts with the rack.

One embodiment of the transfer apparatus for doughpieces according to the invention will now be explained, by way of example, with reference to the accompanying drawings, wherein:

Fig. 1 is a diagrammatic view of successive phases a—f of a transfer cycle;

Fig. 2 is a more detailed, however diagrammatic representation of the transfer belt;

Fig. 3 is a side view of the transfer apparatus;

Fig. 4 is a top view of the transfer apparatus and

Fig. 5 is a left-hand end view of the transfer apparatus according to Fig. 3.

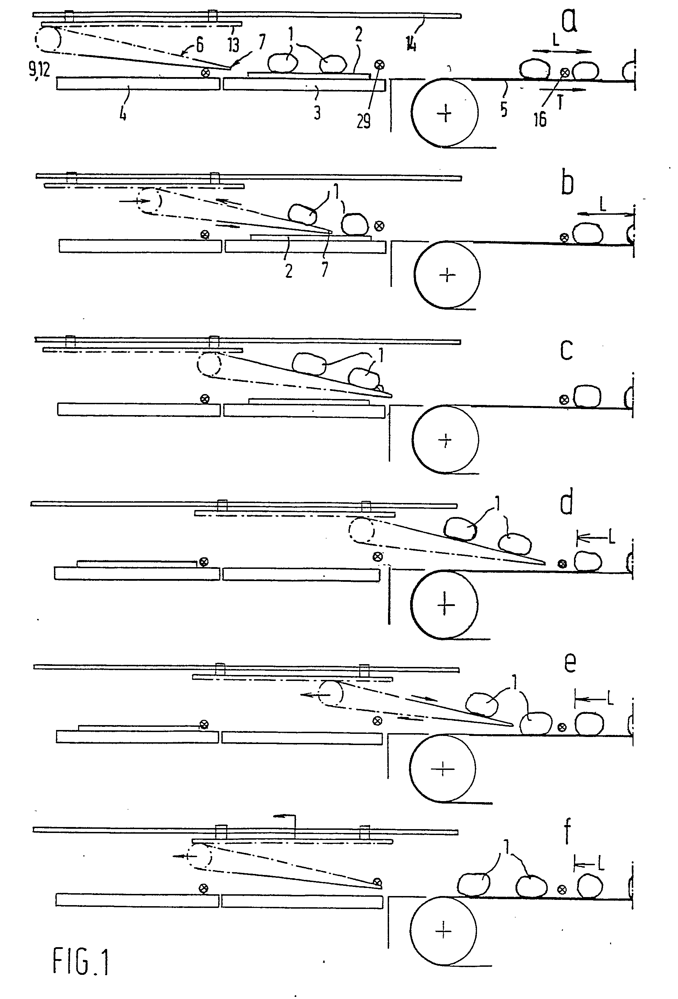

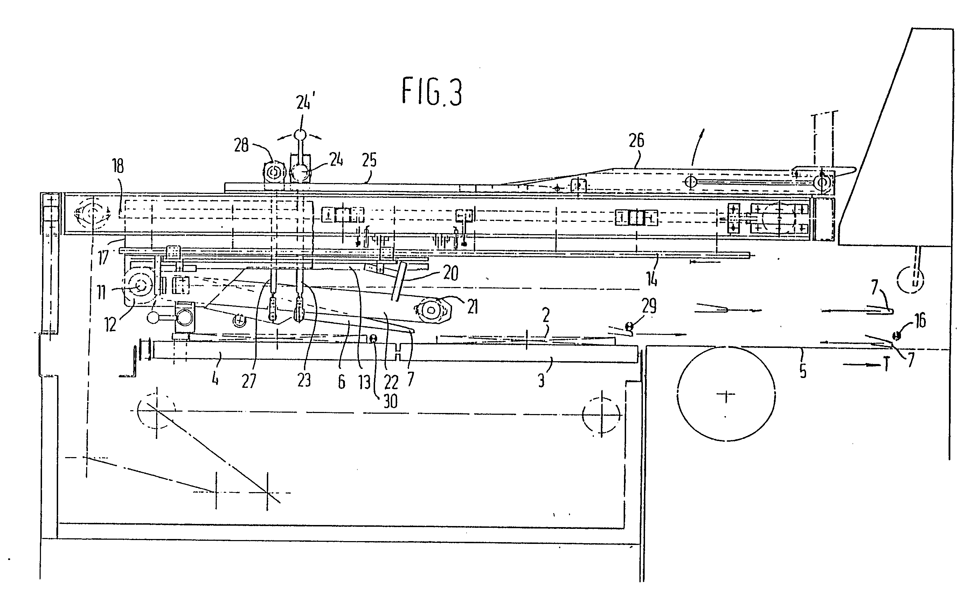

According to the drawing, in particular Fig. 1 and 3, proofed doughpieces 1 are supplied on pallets 2 from a proofer (not shown). The proofer transport is indicated by 3. Empty pallets are discharged on a conveyor 4. The doughpieces 1 are to be transferred to an oven conveyor belt (oven underlay) 5 which moves according to arrow T.

The transfer is effected by means of a transfer belt 6 of the nibbling belt type, i.e. provided with a flat self-supporting edge or nose 7 which can be brought exactly above the bearing area of a pallet 2 so that through relative movement of the nose 7 and the pallet 2 and simultaneous drive of the belt in pickup sense, doughpieces 1 can be drawn on the belt 6.

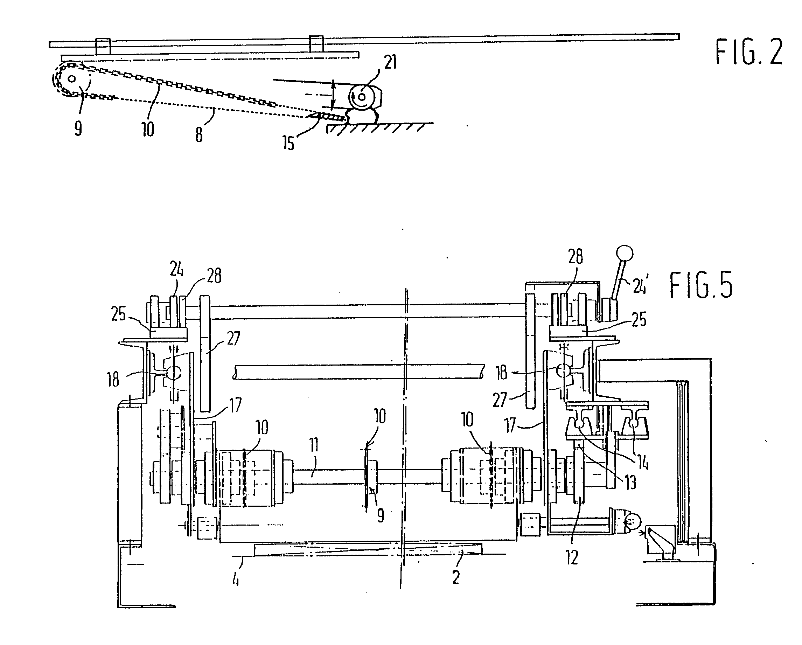

In the embodiment of the transfer belt 6 as depicted in Fig. 2, the belt is composed of a carrying portion formed by an underlay 8 and a non-carrying portion in which extend chains 10 applied over chain wheels 9. The chain wheels 9 are fixed on a shaft 11 on which is also secured a pinion 12 which is in engagement with a rack 13. The rack 13 is movable over a rod 14. By displacement of the pinion over the rack 13, the chain wheels 9 are rotated and thus belt 8, 10 is driven, while the underlay 8 is drawn about a flat frame 15 (see Fig. 2) for drawing (nibbling) doughpieces 1 on the underlay 8 or vice versa for unloading doughpieces.

The operation of the transfer apparatus will now be explained by means of Fig. 1.

In phase a transfer belt 6 and rack 13 are in the starting position, on the proofer transport 3 there is provided a pallet 2 with doughpieces 1 and on the oven underlay can be seen a preceding batch L which has not yet passed a photocell 16.

In phase b the batch L has just passed the photocell 16 so that the loading of the transfer belt 6 is initiated. The transfer belt 6 moves relative to the rack 13 so that the belt is driven in doughpieces-pickup sense and simultaneously the nose 7 moves over the pallet 2. The rack 13 is stationary.

Phase c shows the situation in which the doughpieces 1 have been taken over from the pallet 2 on the belt 6. In this phase the rack 13 is still stationary in the starting position of phase a.

In phase d belt 6 and rack 13 in the relative position of phase c have been jointly moved to a position above the belt 5 wherein the nose 7 is present just behind the preceding batch L. The empty pallet 2 has been pushed on the discharge conveyor 4.

The doughpieces 1 in phase e are deposited on the oven underlay 5 successively behind the preceding batch L by rearwardly displacing the belt 6 along the stationary rack 13 until phase f is attained, from which belt 6 and rack 13 are both moved rearwardly to the starting position of phase a, after which a new cycle can be initiated with the supply of a loaded pallet 2.

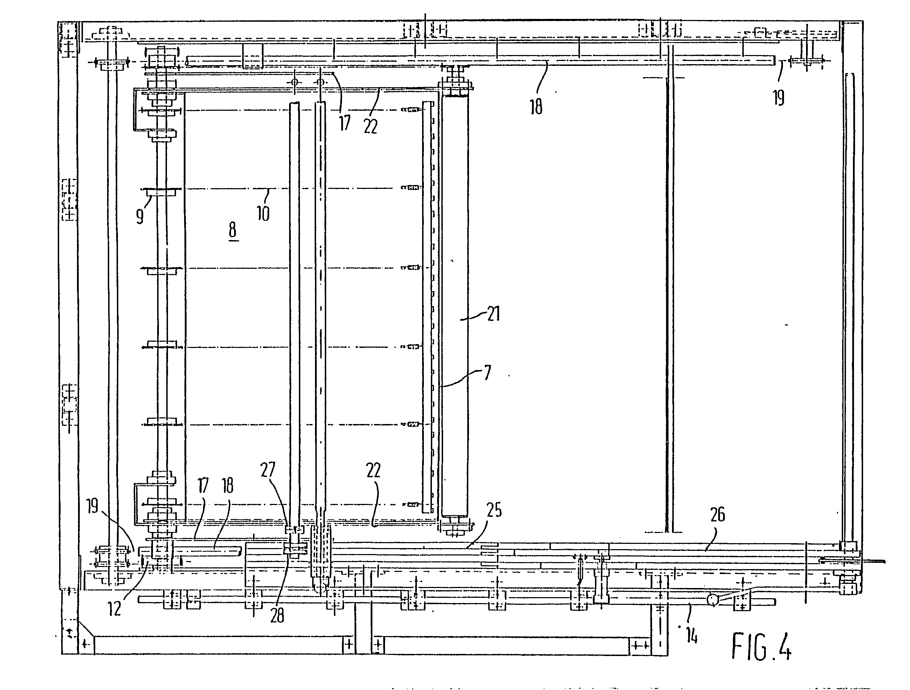

Details of a practical embodiment are shown in Figs. 3—5.

The transfer belt 6 is mounted between side plates 17 slidable over rods 18 by means of drive chains 19.

The rack 13 is slidable over the rods 14 by means of a pawl drive an element 20 of which is shown.

As also indicated in Fig. 2, an auxiliary roller 21 can contribute to a reliable guide of small doughpieces on and off the belt 6. The auxiliary roller 21 is mounted parallel to the nose 7 in arms 22 the position of which can be influenced by suspension from rods 23, rollers 24 and cam tracks 25 a portion 26 of which can be swivelled away upwardly. Through a lever 24' the relative position of the auxiliary roller 21 relative to the cam tracks 25 can be determined.

Also the transfer belt 6 with the nose 7 can be steered in different height positions, on the one hand for bridging differences in height between pickup and delivery level of doughpieces and on the other hand to have the possibility of dropping at such a high level that the doughpieces are deposited upside-down. The differences in height of the nose 7 are indicated in Fig. 3 at the righthand side in the Figure. For steering the belt 6 in height direction, use is made of rods 27 and rollers 28 riding on the cam tracks 25, 26.

Furthermore Fig. 3 shows besides the photocell 16 at the delivery position for doughpieces 1 on the oven underlay 5, also photocells 29 and 30 for controlling the position of the pallets 2 in such a way that a doughpieces batch resting thereon is accurately positioned prior to the pickup by the transfer belt 6 so that also the position of the batch on the transfer belt 6 and the depositing position on the underlay 5 is fixed and furthermore also the discharge of the empty pallets is automatically controlled.

**Claims**

1. A method of transferring proofed doughpieces from a proofer transport (3) to a continuously moving oven underlay (5) in which a doughpiece batch (1) from the proofer transport (3) is picked up by a transfer belt (6) in a pick-up zone by driving said transfer belt (6) to pull said batch (1) over a leading portion (7) of said belt (6), said transfer belt (6), controlled by a sensor (16) arranged adjacent the oven underlay (5) is advanced towards the oven underlay (5) and the batch (1) lying on the transfer belt (6) is deposited on the oven underlay (5) in a delivery zone by driving the transfer belt in an unloading sense and withdrawing the belt (6) simultaneously over the oven underlay (5) surface, characterized in that, signalled by the batch (L) already present on the oven underlay (5) the transfer belt (6) is advanced from a position on the other side of the proofer transport (3), over the proofer transport (3) towards the oven underlay (5) and concurrently therewith, picks up a batch (1) from the proofer transport (3), said transfer belt (6) advance is continued over the oven underlay (5), to catch up with the previous batch (L); the batch (1) is deposited on the oven underlay (5) consecutively to the previous batch (L) on driving the transfer belt in supplying sense with simultaneous withdrawal of the transfer belt (6) in a direction opposite to the transport direction of the oven underlay (5) and so depositing the doughpiece batch (1) over the same leading portion (7) over which the batch (1) has been picked up before, which withdrawal of the transfer belt (6) is continued until the starting position on the said other side of the proofer transport (3) is reattained.

2. Apparatus for transferring proofed doughpieces from a proofer transport (3) to a continuously moving oven underlay (5), provided with a single transfer belt (6) drivable in two directions and furthermore being entirely translatable between a pick-up zone at the proofer transport (3) to a delivery zone above the oven underlay (5) and comprising a sensor (16) such as a photocell, for detecting the position of a preceding dough piece batch (L) on the oven underlay (5) and for initiating loading and advance of the transfer belt (6) to the delivery zone above the oven underlay (5), characterized by said transfer belt (6) having a leading portion (7) over which a batch is picked up as well as deposited and by a further sensor (29) at the pick-up zone for doughpiece batches (1) supplied by the proofer transport (3) for positioning the doughpiece batches (1) in such a way that, seen in the direction of the oven transport, the leading doughpieces of the batch (1) on the transfer belt (6) are always loaded at the same position relative to said loading edge (7).

3. Apparatus according to claim 2, characterized in that the drive of the transfer belt (6) is effected by means of a rack (13) said belt (6) being movable along said rack (13) for driving the belt (6), said rack (13) being translatable over the proofer transport (3) towards the oven underlay (5) and back to a starting position behind the proofer transport (3).

4. A transfer belt, in particular adapted for application of the method according to claim 1 and for use in the apparatus according to claim 2 or 3, characterized in that the non-carrying portion of the conveyor belt (6) is formed by a plurality of chains (8) guided over chain wheels (9).

5. A transfer belt according to claim 4, characterized in that the chain wheels (9) are mounted on a common shaft which also carries the gear (12) which coacts with the rack (13).

**Revendications**

1. Une méthode de transporter des pièces de pâte levées d'un transport d'armoire de fermentation (3) vers une assise du four (5) en mouvement continu où un chargement de pièces de pâte (1) du transport d'armoire de fermentation (3) est pris par une bande de transfert (6) dans une zone de prise en actionnant ladite bande de transfert (6) pour tirer ledit chargement (1) sur une partie de tête (7) de ladite bande (6), ladite bande de transfert (6), contrôlée par un senseur (16) disposé près de l'assise du four (5), est avancée vers l'assise du four (5) et le chargement (1) se trouvant sur la bande de transfert (6) est déposé sur l'assise du four (5) dans une zone de livraison en actionnant la bande de transfert dans un sens de déchargement et en retirant la bande (6) simultanément sur la surface de l'assise du four (5), caractérisée en ce que la bande de transfert (6), signalée par le chargement (L) déjà présent sur l'assise du four (5), est avancée d'une position à l'autre côté du transport d'armoire de fermentation (3), sur le transport d'armoire de fermentation (3) vers l'assise du four (5) et concurrement avec cela, prend un chargement (1) du transport d'armoire de fermentation (3), ledit avancement de la bande ce transfert (6) est continué sur l'assise du four (5) pour rattraper le chargement précédent (L); le chargement (1) est déposé sur l'assise du four (5) consécutivement au chargement précédent (L) en actionnant la bande de transfert en sens d'alimentation, avec retrait simultané de la bande de transfert (6) dans une direction opposée à la direction de transport de l'assise du four (5), déposant ainsi le chargement de pièces de pâte (1) sur la même partie de tête (7) sur laquelle le chargement (1) a été pris auparavant, lequel retrait de la bande de transfert (6) est continué jusqu'à ce que la position de départ audit autre côté du transport d'armoire de fermentation (3) soit atteinte de nouveau.

2. Un appareil pour transférer des pièces de pâte levées d'un transport d'armoire de fermentation (3) vers une assise du four (5) en mouvement continu, comprenant une seule bande de transfert (6) pouvant être actionnée en deux directions et en plus étant entièrement déplaçable entre une zone de prise près du transport d'armoire de fermentation (3) vers une zone de livraison au-dessus de l'assise du four (5) et comprenant un senseur (16), comme une cellule photo-électrique, pour détecter la position d'un chargement précédent de pièces de pâti (L) sur l'assise du four (5) et pour initier le chargement et l'avancement de la bande de transfert (6) vers la zone de livraison au-dessus de l'assise du four (5), caractérisé en ce que ladite bande de transfert (6) possède une partie de tête (7) sur laquelle un chargement est pris et déposé et par un autre senseur (29) près de la zone de prise pour des chargements de pièces de pâte (1) délivrés par le transport d'armoire de fermentation (3) pour placer les chargements de pièces de pâte (1) d'une telle manière que, vu dans la direction du transport du four, les pièces de pâte de tête du chargement (1) sur la bande de transfert (6) soient toujours chargées à la même position par rapport audit bord de charge (7).

3. Un appareil selon la revendication 2, caractérisé en ce que l'actionnement de la bande de transfert (6) est effectué par une crémaillère (13), ladite bande (6) étant mobile lelong de ladite crémaillère (13) pour actionner la bande (6), ladite crémaillère étant deplaçable sur le transport d'armoire de fermentation (3) vers l'assise du four (5) en retournant à une position de départ derrière le transport d'armoire de fermentation (3).

4. Une bande de transfert, particulièrement qualifée pour application de la méthode selon la revendication 1 et pour utilisation dans l'appareil selon les revendications 2 ou 3, caractérisée en ce que la partie non porteuse de la bande transporteuse (6) est formée par un nombre de chaînes (8) guidées sur des roues de chaîne (9).

5. Une bande de transfert selon la revendication 4, caractérisée en ce que les roues de chaîne (9) sont montées sur un arbre commun qui également porte l'engrenage (12) coopérant avec la crémaillère (13).

**Patentansprüche**

1. Verfahren zum Überführen von gegärten Teigstücken von einem Gärtransport (3) auf eine sich kontinuierlich bewegende Ofenunterlage (5), bei dem ein Schub (1) Teigstücke von dem Gärtransport (3) von einem Überführungsband (6) in einer Aufnehmzone aufgenommen wird, indem das Überführungsband (6) angetrieben und der Schub (1) auf einen Vorderabschnitt (7) des Bandes (6) gezogen wird, wobei das Überführungsband (6), von einem der Ofenunterlage (5) benachbarten Sensor (16) gesteuert, auf die Ofenunterlage (5) zu bewegt und der auf dem Überführungsband (6) liegende Schub (1) auf die Ofenunterlage (5) in eine Abgabezone abgelegt wird, indem das Überführungsband (6) im Entladesinne angetrieben und gleichzeitig über die Oberfläche der Ofenunterlage (5) zurückgezogen wird, dadurch gekennzeichnet, daß gemäß einem Signal von dem bereits aud der Ofenunterlage (5) befindlichen Schub (L) das Überführungsband (6) aus einer Stellung auf der anderen Seite des Gärtransports (3) über den Gärtransport (3) auf die Ofenunterlage (5) zu bewegt wird und gleichzeitig einen Schub (1) von dem Gärtransport (3) aufnimmt, wobei die Vorwärtsbewegung des Überführungsbandes (6) über die Ofenunterlage (5) fortgesetzt wird, um den vorhergehenden Schub (L) einzuholen;

daß der Schub (1) auf der Ofenunterlage (5) an den vorhergehenden Schub (L) anschließend abgelegt wird, wobei das Überführungsband im Zuführungssinn bei gleichzeitigem Zurückziehen des Überführungsbandes (6) in eine zur Transportrichtung des Ofenbandes (5) entgegengesetzte Richtung angetrieben wird und so der Schub (1) von Teigstücken über denselben Vorderabschnitt (7) abgelegt wird, über den der Schub (1) zuvor aufgenommen wurde, und wobei das Zurückziehen des Überführungsbandes fortgesetzt wird, bis die Anfangsstellung auf der anderen Seite des Gärtransports (3) wieder erreicht ist.

2. Vorrichtung zum Überführen gegärter Teigstücke von einem Gärtransport (3) auf eine sich kontinuierlich bewegende Ofenunterlage (5), mit einem einzigen, in zwei Richtungen antreibbaren und insgesamt zwischen einer Aufnahmezone am Gärtransport (3) und einer Abgabezone oberhalb der Ofenunterlage (5) bewegbaren Überführungsband (6) sowie mit einem Sensor (16), z.B. einer Fotozelle, zum Feststellen der Stellung eines vorhergehenden Schubs (L) von Teigstücken auf der Ofenunterlage (5) und zum Einleiten des Ladens und Vorwärtsbewegens des Überführungsbandes (6) zur Abgabezone oberhalb der Ofenunterlage (5), dadurch gekennzeichnet, daß das Überführungsband (6) einen Vorderabschnitt (7) besitzt, über welchen ein Schub sowohl aufgenommen als auch abgegeben wird, und daß ein weiterer Sensor (29) an der Augnahmezone der von dem Gärtransport (3) zugeführten Teigstück-Schübe (1) diese derart positioniert, daß in Richtung des Ofentransports gesehen die vorderen Teigstücke des Schubs (1) auf dem Überführungsband (6) jeweils in derselben Relativstellung zum Vorderabschnitt (7) geladen werden.

3. Vorrichtung nach Anspruch 2, dadurch gekennzeichnet, daß der Antrieb des Überführungsbandes (6) mittels einer Zahnstange (13) bewirkt wird, wobei das Band (6) zum Zwecke seines Antriebs längs der Zahnstange (13) beweglich ist, und daß die Zahnstange (13) über den Gärtransport (3) zur Ofenunterlage (5) und zurück zur Anfangsstellung hinter dem Gärtransport (3) bewegbar ist.

4. Überführungsband, insbesondere geeignet bei der Anwendung des Verfahrens nach Anspruch 1 und zur Verwendung in der Vorrichtung nach Anspruch 2 oder 3, dadurch gekennzeichnet, daß der nichttragende Abschnitt des Förderbandes (6) von mehreren Ketten (8) gebildet ist, die über Kettenräder (9) geführt sind.

5. Überführungsband nach Anspruch 4, dadurch gekennzeichnet, daß die Kettenräder (9) auf einer gemeinsamen Welle befestigt sind, die außerdem das mit der Zahnstange (13) zusammenwirkende Zahnrad (12) trägt.

FIG.1

FIG. 2

FIG.5

FIG.3

FIG.4